# EUROPÄISCHE PATENTSCHRIFT

(11) **EP 2 455 424 B1**
(45) Veröffentlichungstag und Bekanntmachung des Hinweises auf die Patenterteilung: **01.01.2014**
(21) Anmeldenummer: 11186876.6
(22) Anmeldetag: 27.10.2011
(51) Int. Cl.: C08L 61/04, C09J 161/06, C08G 59/00, C08G 73/02, C08K 5/00, C09D 163/00

(54) **Verfahren zur kontinuierlichen Herstellung eines Prepolymers basierend auf Phenolharzen, Oxazolinen und Epoxiden**
Method for continuous production of a prepolymer based on phenol resins, oxazolines and epoxides
Procédé de fabrication continue d'un prépolymère à base de résines phénoliques, d'oxazolines et d'époxydes

(30) Priorität: 17.11.2010 DE 102010044050
(43) Veröffentlichungstag der Anmeldung: 23.05.2012
(73) Patentinhaber: Evonik Degussa GmbH, 45128 Essen (DE)
(72) Erfinder: Omeis, Marianne, 46286 Dorsten (DE); von Itter, Franz-Albert, 53347 Alfter (DE); Weihrauch, Thomas, 48249 Dülmen (DE)

(56) Entgegenhaltungen:
- EP-A2- 1 085 071
- WO-A1-94/14867
- DE-A1-102008 001 470
- US-A- 4 652 620

## Beschreibung

Die vorliegende Erfindung beschreibt ein kontinuierliches Verfahren zur Herstellung eines Prepolymers basierend auf Oxazolinen, Epoxiden und Phenolharzen unter Verwendung eines Katalysators, sowie deren Verwendung.

E. A. Boulter et al. beschreiben in Electrical Insulation Conference, 1997, and Electrical Manufacturing & Coil Winding Conference Proceedings, Band 22-25 (September 1997), Seiten 249 - 253, die Eigenschaften oxazolin-modifizierter Phenolharze, wie beispielsweise die Haftung auf Kohlefasern, Glasfasern und Metallen, die Beständigkeit gegenüber thermooxidativem Abbau, die geringe Rauchentwicklung bei einem Brand, die geringe Entflammbarkeit und die hohe Schlagzähigkeit. Besonders wegen der geringen Entflammbarkeit eignen sich diese Polymere zur Herstellung von Bauteilen für die Flugzeugindustrie. Weitere Anwendungen sind im Bereich der elektrischen Isolierung und im Elektronikbereich zu finden. Gemäß E. A. Boulter eignen sich diese Precursor bzw. Prepolymere unter anderem auch für Spritzguss, Resin Transfer Moulding (RTM) und Prepregs.

Die Reaktion von bifunktionellen Oxazolinen mit Phenolharzen ist in der Literatur beschrieben. So beschreibt die Patentschrift US 4,699,970 die Umsetzung von Phenolharzen mit 1,3-Phenylenbisoxazolin in Gegenwart von katalytischen Mengen an Triphenylphosphit. Die Härtung wird gemäß den Beispielen bei einer Temperatur von 225°C durchgeführt. Die erhaltenen Polymere weisen eine Glasübergangstemperatur von 138 bis 184°C auf.

In der US 5,302,687 wird ebenfalls die Umsetzung von 1,3-Phenylenbisoxazolin mit Phenolharz in Gegenwart von Phosphonium- bzw. Ammoniumsalzen beschrieben. Auch hier erfolgt die Härtung gemäß den Beispielen bei 225°C und auch hier erhält man Polymere mit einer Glasübergangstemperatur von 150 bis 157°C.

Die WO 2009/132924 beschreibt eine Phenolharz-aufweisende Polymerzusammensetzung, die Oxazoline und einen Stabilisator aufweist. Als Katalysatoren werden Trialkyl- oder Triarylphosphite eingesetzt. Die Herstellung dieser Polymerzusammensetzung wird vorzugsweise mittels eines Extruders hergestellt.

Die WO 2009/053581 beschreibt eine Harzzusammensetzung bestehend aus einer Epoxidharz, einem Weichmacher, wobei der Weichmacher die Funktion hat, das Epoxidharz zu lösen und die Viskosität zu beeinflussen. Ferner können dieser Harzzusammensetzung Vernetzer, wie beispielsweise 1,3-Phenylenbisoxazoline, zugesetzt werden. Als Katalysator werden sowohl Lewis-Basen als auch Lewis-Säuren genannt, wie beispielsweise Bortrifluorid-Monoethylamin. Die Zusammensetzung kann durch einfaches Mischen hergestellt werden. Die Härtungstemperatur beträgt maximal 195°C.

Hajime Kimura et al. beschreiben in Journal of Applied Polymer Science, Vol. 107, 710-718 (2008) die Herstellung einer Harzzusammensetzung bestehend aus Bisoxazolinen und Benzoxazinen unter Verwendung einer Mischung aus einer Sulfonsäure und einem Aminoalkohol oder Alkylamin als Katalysator (latente Sulfonsäure). Die Herstellung des Harzes wird im Batchverfahren vorgenommen. Die erhaltenen Polymere besitzen eine Glasübergangstemperatur zwischen 149 und 186°C.

Es war die Aufgabe der vorliegenden Erfindung, ein Prepolymer auf der Basis von Phenolharzen zur Verfügung zu stellen, das sich durch eine gute Löslichkeit in Ketonen und durch einen Schmelzpunkt unterhalb von 100°C auszeichnet. Insbesondere sollte das Prepolymer zur Herstellung von Werkstoffen mit einer Glasübergangstemperatur T_{g} im Bereich von 140 bis 200°C geeignet sein.

Überraschenderweise wurde ein kontinuierliches Verfahren gefunden, das die Herstellung eines Prepolymers aus einer Oxazolin-Komponente, Phenolharzen, Epoxiden und eines Katalysators ermöglicht. Das Prepolymer kann aufgrund des eingesetzten Katalysators bei geringeren Härtungstemperatur hergestellt bzw. die Härtungszeit kann gegenüber Verfahren gemäß dem Stand der Technik verkürzt werden. Die daraus resultierenden Polymere zeichnen sich durch eine Glasübergangstemperatur T_{g} von 140 bis 200°C aus.

Weiterhin konnte gezeigt werden, dass die erfindungsgemäßen Prepolymere kontinuierlich per Extrusion hergestellt werden können. Die Extrusion liefert überraschenderweise die Möglichkeit, Prepolymere nahezu ohne Vorvernetzung zu erzeugen, im Gegensatz zu den im Stand der Technik genannten Batchprozessen. Durch den Einsatz eines Extruders, der zum einen eine intensive Durchmischung der Einsatzstoffe sicherstellt und zum anderen eine zeitlich und örtlich separate Dosierung der Einsatzstoffe ermöglicht, können unerwünschte Vorreaktionen nahezu vermieden werden. Durch das zügige Abkühlen der Schmelze des Prepolymers durch ein gekühltes Band nach dem Düsenaustritt erfolgt ein definierter Abbruch der Reaktion. Somit erhält man ein Prepolymer, das sich durch eine sehr geringe Vernetzung und durch seine Homogenität auszeichnet und daher weitestgehend in handelsüblichen Lösemitteln, wie beispielsweise Ketonen, löslich ist. Ferner ermöglicht das erfindungsgemäße Verfahren, dass das erfindungsgemäße Prepolymer über konstante Produkteigenschaften verfügt.

Für die Anwendung der Prepolymeren als Resin Transfer Moulding (RTM) -System , Verarbeitung als Lösung, beispielweise zur Beschichtung von Glasfasern oder Herstellung von Prepregs, muss ein gelfreies Material zur Verfügung stehen. Das gemäß dem Stand der Technik batchweise hergestellte Material ist weder in handelsüblichen Lösungsmittel löslich, noch ist ein Schmelzpunkt feststellbar. Hingegen ist das erfindungsgemäße Prepolymer in handelsüblichen Lösungsmitteln nahezu rückstandsfrei löslich und kann somit einfach weiterverarbeitet werden. Ferner können die erfindungsgemäßen Prepolymere u.a. zur Herstellung von Strukturbauteilen für den Bereich der Elektrolaminate, Transportwesen und Flugzeugindustrie eingesetzt werden.

Gegenstand der Erfindung ist somit ein Verfahren zur kontinuierlichen Herstellung von Prepolymeren basierend auf Phenolharz, einer Oxazolin-Komponente und einem Epoxid in Gegenwart eines Katalysators, das sich dadurch auszeichnet, dass das Phenolharz und die Oxazolin-Komponente in einem Stoffstrom A und ein Lewis-Addukt des Bortrifluorids oder des Aluminiumtrichlorids oder Arylsulfonsäuren oder Alkylsulfonsäuren oder latente Arylsulfonsäuren oder latente Alkylsulfonsäuren als Katalysator in einem Stoffstrom B und das Epoxid in einem Stoffstrom C dem Extruder zugeführt werden, wobei der Zulauf des Stoffstroms A in Extrusionsrichtung gesehen vor dem Zulauf des Stoffstroms C liegt, bei einer Reaktionstemperatur von 120 bis 200 °C und einer Verweilzeit dieser Edukte im Extruder von 3 Sekunden bis 15 Minuten durchmischt werden und anschließend der Produktaustrag des Extruders auf eine Temperatur von kleiner 45 °C innerhalb von 30 bis 60 Sekunden abgekühlt wird.

Ferner ist Gegenstand dieser Erfindung ein Prepolymer erhältlich durch das erfindungsgemäße Verfahren, sowie die Verwendung des erfindungsgemäßen Prepolymers.

Im Rahmen dieser Erfindung werden unter Prepolymere überwiegend oligomere Verbindungen verstanden, die auch geringe Anteile an polymeren Verbindungen aufweisen können. Im Gegensatz zu Polymeren sind die Prepolymere noch löslich und plastisch verarbeitbar und können vorwiegend durch thermisch ausgelöste Reaktionen in die Zielpolymere überführt werden. Unter dem Begriff latente Arylsulfonsäure bzw. latente Alkylsulfonsäure versteht man eine Mischung aus einer Sulfonsäure und einem Aminoalkohol oder einem Alkylamin.

In dem erfindungsgemäßen Verfahren werden als Oxazolin-Komponente vorzugsweise Oxazoline gemäß der Struktur (1) 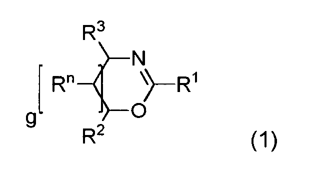 mit
R¹ = C₁₋₂-Alkyl- oder Phenylgruppe,
R², R³, Rⁿ = Wasserstoff, C₁₋₂-Alkylgruppe,
g = 0, 1, 2, 3,
und/oder Bisoxazoline gemäß der Struktur (2) 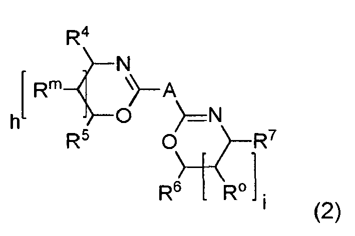 mit
A = Methylen oder Phenylen,
R⁴, R⁵, R⁶, R⁷,R^{m},R^{o} = Wasserstoff, C₁₋₂Alkylgruppe,
h, i = 0, 1, 2, 3,
wobei die Substituenten vom Typ R¹, R², R³, R⁴, R⁵, R⁶, R⁷, Rⁿ, R^{m} und R^{o} gleich oder verschieden sowie substituiert oder unsubstituiert sein können, das Strukturfragment A substituiert oder unsubstituiert sein kann und m und o gleich oder verschieden sein kann, eingesetzt. Das Strukturfragment A kann als Substituent eine Methyl- und/oder eine Ethylgruppe aufweisen. Die Substituenten vom Typ R¹, R², R³, R⁴, R⁵, R⁶, R⁷, Rⁿ, R^{m} und R^{o} sind vorzugsweise unsubstituiert.

In dem erfindungsgemäßen Verfahren werden vorzugsweise Verbindungen gemäß den Strukturen (1) und/oder (2) eingesetzt, die Substituenten vom Typ R¹, R², R³, R⁴, R⁵, R⁶, R⁷, Rⁿ, R^{m} und R^{o} als auch das Strukturfragment A, die unsubstituiert sind, aufweisen. Bevorzugt werden Verbindungen gemäß den Strukturen (1) und/oder (2) mit g, h, i = 0 oder 1 eingesetzt.

In einer bevorzugten Ausführungsform des erfindungsgemäßen Verfahrens werden Bisoxazoline gemäß der Struktur (2) eingesetzt, wobei m und o vorzugsweise 0 oder 1 sind. Insbesondere werden Bisoxazoline gemäß der Struktur (2) eingesetzt, die als Strukturfragment A eine Phenylengruppe aufweisen, wie beispielsweise 1,3-Phenylenbisoxazolin oder 1,4-Phenylenbisoxazolin. Um die Eigenschaften des Prepolymers gezielt einzustellen, kann auch eine Mischung aus Oxazolinen und Bisoxazolinen als Oxazolin-Komponente eingesetzt werden.

Vorzugsweise werden in dem erfindungsgemäßen Verfahren von 10 bis 90 Gew.-%, bevorzugt von 30 bis 60 Gew.-% und besonders bevorzugt von 40 bis 55 Gew.-% der Oxazolin-Komponente bezogen auf die Zusammensetzung des Einsatzstoffe eingesetzt.

In dem erfindungsgemäßen Verfahren werden vorzugsweise Phenolharze, die durch Kondensation von Phenolen mit Aldehyden, insbesondere Formaldehyd, gewonnen werden, eingesetzt. So können in diesem Verfahren Phenolharze, ausgewählt aus dem Novolak-und/oder Resol-Typ, eingesetzt werden. Besonders bevorzugt werden Novolake als Phenolharz (B) eingesetzt. In dem erfindungsgemäßen Verfahren werden vorzugsweise von 10 bis 90 Gew.-%, bevorzugt von 30 bis 60 Gew.-% und besonders bevorzugt von 40 bis 50 Gew.-% an Phenolharz bezogen auf die Zusammensetzung der Einsatzstoffe eingesetzt.

Als Epoxide können in dem erfindungsgemäßen Verfahren Monoepoxide gemäß der Struktur (3) 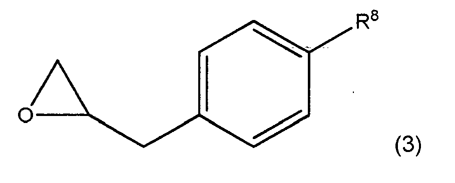 mit
R⁸ = Wasserstoff, C₁₋₃-Alkylgruppe,

Diepoxide gemäß der Struktur (4) 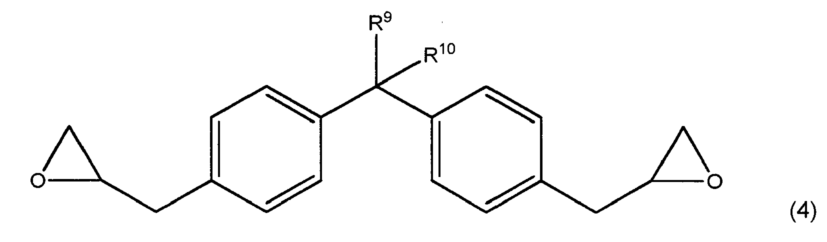 mit
R⁹ und R¹⁰ = Wasserstoff und C₁₋₃-Alkylgruppe, wobei R⁹ und R¹⁰ gleich oder verschieden sein können
oder mehrfunktionelle Epoxide gemäß der Struktur (5) und/oder der Struktur (6) 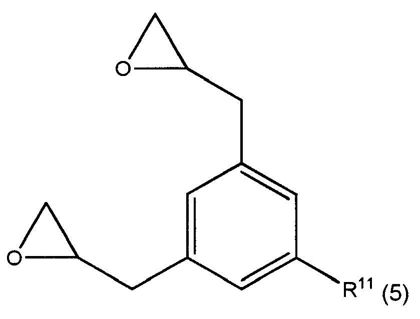 mit
R¹¹ = Wasserstoff, C₁₋₃-Alkylgruppe oder 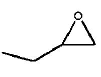 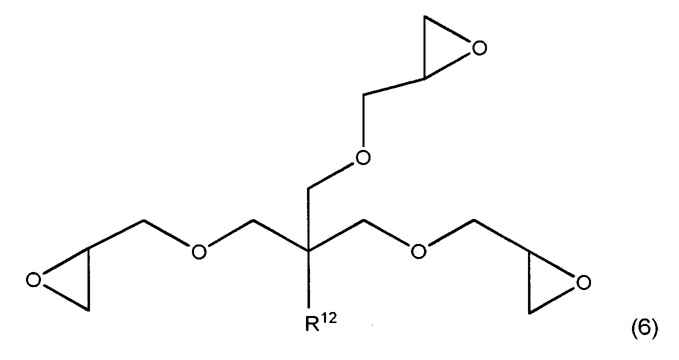
mit
R¹² = Wasserstoff oder C₁₋₃-Alkylgruppe
eingesetzt werden. Vorzugsweise werden in dem erfindungsgemäßen Verfahren Mischungen bestehend aus Monoepoxiden, Diepoxiden und/oder mehrfunktionellen Epoxiden als Epoxid eingesetzt. Vorzugsweise weisen die Strukturen (3) bis (6) lineare Alkylgruppen auf.

In dem erfindungsgemäßen Verfahren werden vorzugsweise von 1 bis 10 Gew.-%, bevorzugt von 3 bis 8 Gew.-% und besonders bevorzugt von 4 bis 6 Gew.-% an Epoxid bezogen auf die Zusammensetzung der Einsatzstoffe eingesetzt.

In einer besonderen Ausführungsform des erfindungsgemäßen Verfahrens können zusätzlich auch Benzoxazine der Struktur (7) 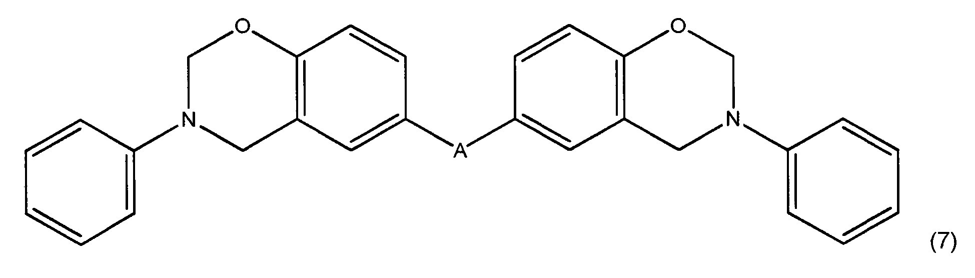 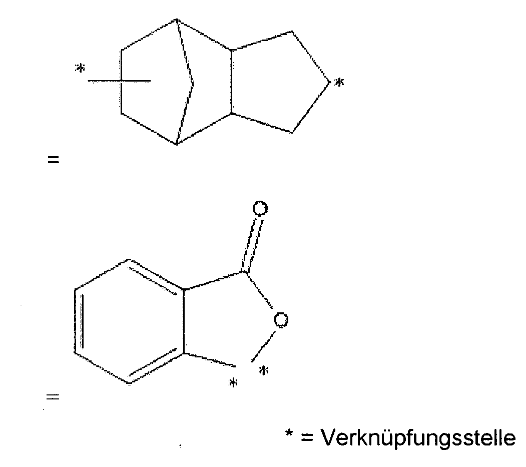 dem Extruder zugeführt werden. Im Bereich von 180 - 190 °C lagern diese um, so dass weitere phenolische OH - Gruppen für die Reaktion zur Verfügung stehen.

Es werden in dem erfindungsgemäßen Verfahren vorzugsweise von 0 bis 10 Gew.-%, bevorzugt von 2 bis 9 Gew.-% und besonders bevorzugt von 4 bis 8 Gew.-% an Benzoxazinen bezogen auf die Zusammensetzung der Einsatzstoffe eingesetzt. In einer besonderen Ausführungsform des erfindungsgemäßen Verfahrens wird kein Benzoxazin eingesetzt.

Als Katalysatoren werden in dem erfindungsgemäßen Verfahren vorzugsweise Lewis-Addukte des Bortrifluorids oder latente Arylsulfonsäuren eingesetzt, insbesondere Bortrifluorid-Ethylamin-Addukt, Bortrifluorid-Methanol-Addukt, Bortrifluorid-Phosphorsäure, p-Toluolsulfonsäure / Diethanolamin oder p-Toluolsulfonsäure / 1-Amino-2-Propanol. Die Lewis-Addukte des Bortrifluorids spalten bei höheren Temperaturen BF₃ ab. Das direkte Einsetzen des BF₃ in dem erfindungsgemäßen Verfahren ist aufgrund des Gaszustands und seiner Giftigkeit nicht empfehlenswert. Alternativ können auch AlCl₃-Addukte eingesetzt werden. Im Rahmen der vorliegenden Erfindung handelt es sich bei den latenten Sulfonsäuren um Addukte aus Sulfonsäuren und Donorverbindungen. Insbesondere handelt es sich bei den Donorverbindungen um Aminoalkohole oder Alkylamine mit 1 bis 4 Kohlenstoffatomen. Insbesondere bevorzugt handelt es sich bei der latenten Sulfonsäure um eine äquimolare Mischung aus der Sulfonsäure und einem Aminoalkohol oder Alkylamin, vorzugsweise Aminoalkohol. Ohne an eine Theorie gebunden zu sein, ist davon auszugehen, dass bei den latenten Sulfonsäuren die katalytisch wirksamen Sulfonsäuren bei höheren Temperaturen freigesetzt werden.

Der Katalysator wird in dem erfindungsgemäßen Verfahren vorzugsweise in einer Menge von 0,2 bis 5 Gew.-%, bevorzugt von 0,4 bis 4 Gew.-% und besonders bevorzugt von 0,5 bis 3 Gew.-% bezogen auf die Zusammensetzung der Einsatzstoffe eingesetzt.

Von Vorteil ist es, den Lewis-Addukt Katalysator als Lösung dem Extruder zuzuführen. Vorzugsweise wird der Katalysator als alkoholische Lösung, bevorzugt als ethanolische Lösung in dem erfindungsgemäßen Verfahren eingesetzt. Der Gehalt des Katalysators in dem Alkohol beträgt vorzugsweise von 30 bis 50 Gew.-%. Bei der Verwendung von Arylsulfonsäuren oder Alkylsulfonsäuren als Katalysator, alleine oder als latente Sulfonsäure, ist es vorteilhaft, diesen als Schmelze in den Extruder zu dosieren.

In dem erfindungsgemäßen Verfahren können neben dem Katalysator auch Antioxidantien zugegeben werden, bevorzugt erfolgt dies in einem der Zuläufe der Einsatzstoffe in den Extruder. Vorzugsweise werden als Antioxidantien sogenannte sterisch gehinderte Phenole eingesetzt, bevorzugt sind dies Verbindungen gemäß der Struktur (8), 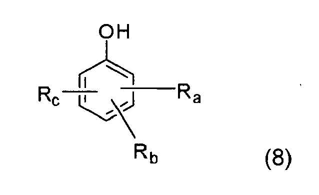 mit Rₐ, R_{b}, R_{c} = Wasserstoff, Alkyl-, Alkylaryl- oder Cycloalkylgruppe, wobei die Substituenten vom Typ Rₐ, R_{b}, R_{c} gleich oder verschieden sowie substituiert oder unsubstituiert sein können,
wie beispielsweise dem Reaktionsprodukt von 4-Methylphenol mit Dicyclopentadien und Isobuten gemäß Struktur (9), 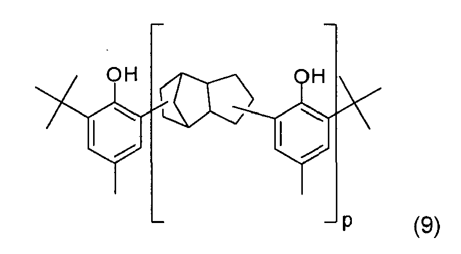 mit
p = 1 bis 5.

Die Antioxidantien werden vorzugsweise in einer Menge von 0,1 bis 2 Gew.-%, bevorzugt von 0,2 bis 1,5 Gew.-% und besonders bevorzugt von 0,2 bis 1,2 Gew.-% bezogen auf die Zusammensetzung der Einsatzstoffe in dem erfindungsgemäßen Verfahren eingesetzt. Als Antioxidantien können beispielsweise RALOX^{®} LC oder IONOL^{®} LC eingesetzt werden.

Ferner können in dem erfindungsgemäßen Verfahren auch Stabilisatoren eingesetzt werden, vorzugsweise werden sogenannte HALS-Verbindungen (Hindered Amine Light Stabilizers) - Derivate des 2,2,6,6-Tetramethylpiperidin-4-on, eingesetzt. Auch die Zugabe einer Mischung an verschiedenen HALS-Verbindungen ist möglich. Durch die Zugabe von Stabilisatoren kann die Langzeitstabilität des resultierenden Polymers verbessert werden.

Bevorzugt werden in dem erfindungsgemäßen Verfahren Stabilisatoren gemäß der Struktur (10) 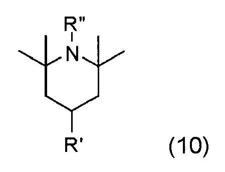 mit
R' = Alkoxygruppe, 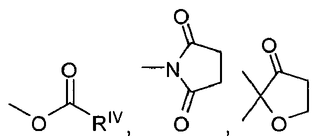 oder 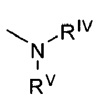 und
R" = Sauerstoffradikal (-O^{•}), Wasserstoff, Alkyl- oder Alkoxygruppe, 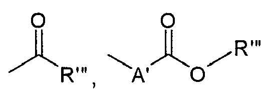 oder 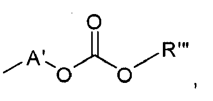
wobei R"' und R^{Iv} = Alkylgruppe, R^{V} = Heterocyclus und A' = Alkylengruppe und die Alkyl-, Alkoxy-, Alkylengruppen und Heterocyclen substituiert oder unsubstituiert sind,
eingesetzt. Besonders bevorzugt werden in dem erfindungsgemäßen Verfahren Stabilisatoren gemäß den folgenden Strukturen (11) bis (13) eingesetzt: 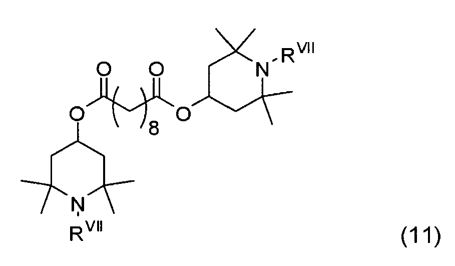 mit R^{VII} = Wasserstoff, Alkyl- oder Alkoxygruppe, 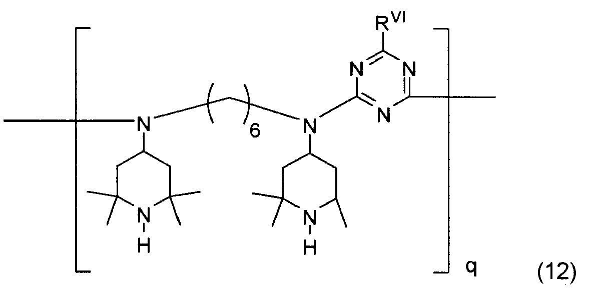 mit 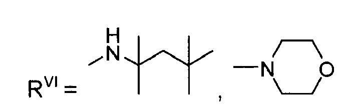 oder 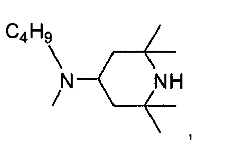 q = 2 bis 10, oder 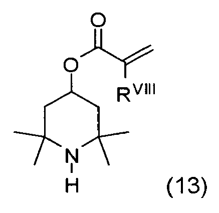 mit R^{VIII} = Wasserstoff oder Alkylgruppe.

In einer weiteren Ausführungsform des erfindungsgemäßen Verfahrens werden sogenannte Polymer-bound-HALS-Verbindungen eingesetzt, wie beispielsweise Verbindungen gemäß der Struktur (14) 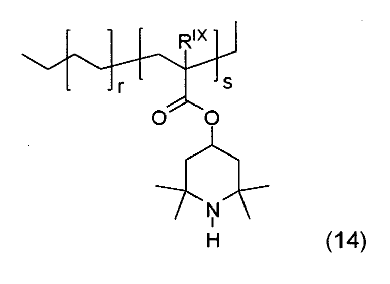 mit
R^{IX} = Wasserstoff oder Alkylgruppe und
r, s ≥ 10.

Bei diesen Polymer-bound-HALS-Verbindungen handelt es sich um 2,2,6,6-Tetramethylpiperidin-4-on-Derivate, die an oder in einer Polymerkette eingebunden sind.

Insbesondere werden die Stabilisatoren in einer Menge von 0,1 bis 2 Gew.-%, bevorzugt von 0,2 bis 1,5 Gew.-% und besonders bevorzugt von 0,3 bis 1,2 Gew.-% bezogen auf die Zusammensetzung der Einsatzstoffe in dem erfindungsgemäßen Verfahren eingesetzt.

Bevorzugt werden in dem erfindungsgemäßen Verfahren sowohl sterisch gehinderte Phenole als auch HALS-Verbindungen den Einsatzstoffen beigemischt.

In einer weiteren Ausführungsform des erfindungsgemäßen Verfahrens können die Stabilisatoren und/oder die Antioxidantien nachträglich in einem nachgeschalteten Aggregat dem Prepolymer beigemischt werden.

In dem erfindungsgemäßen Verfahren ist es vorteilhaft, Additive wie beispielsweise Entlüfter, Entschäumer oder sogenannte Verlaufsadditive den Einsatzstoffen zuzugeben. Als Additive können beispielsweise Silikonöle oder silikonmodifizierte Polyglycole und Polyether, schaumzerstörende Polysiloxane oder Polymere, polyethermodifizierte Polymethylalkylsiloxane eingesetzt werden, wie sie beispielsweise von der Fa. BYK unter den Handelsnamen BYK^{®}-A 506, BYK^{®}-A 525, BYK^{®}-A 530, BYK-054, BYK^{®}-R 605, BYK^{®}-R 606 oder BYK^{®}-A 535 vertrieben werden. Der Zusatz dieser Additive hat den Vorteil, dass die Blasenbildung in dem Prepolymer als auch in dem späteren Werkstoff deutlich abgesenkt werden kann. Die Additive oder auch Mischungen mehrerer dieser Additive werden vorzugsweise in Mengen von 0,1 bis 1 Gew.-%, bevorzugt von 0,2 bis 0,8 Gew.-% und besonders bevorzugt von 0,3 bis 0,7 Gew.-%, bezogen auf die Zusammensetzung der Einsatzstoffe, zugegeben.

Weiterhin können dem Prepolymer sowohl halogenierte als auch nicht-halogenierte Flammschutzmittel zugesetzt werden, vorzugsweise werden in dem erfindungsgemäßen Verfahren von 1 bis 10 Gew.-% des Flammschutzmittels bezogen auf die Zusammensetzung der Einsatzstoffe eingesetzt.

Bei Anwendung einer Lösung des erfindungsgemäßen Prepolymers empfiehlt sich die Zugabe von Verlaufsmitteln, Benetzungsmitteln, Entlüftern, weiteren Lösemitteln und anorganische Additive, wie beispielsweise gefällte Kieselsäuren, unter anderem um Anhaftungen an Oberflächen, das Verlaufsbild und auch die Flammfestigkeit zu verbessern. So werden vorzugsweise von 0,5 bis 5 Gew.-%, bevorzugt von 2 bis 4 Gew.-% einer gefällten Kieselsäure, bezogen auf die Zusammensetzung der Einsatzstoffe, wie sie beispielsweise unter dem Handelsnamen SIPERNAT^{®} 50 vertrieben wird, in dem erfindungsgemäßen Verfahren eingesetzt.

Weitere Additive können aus dem Bereich der Schlagzähmodifier stammen, so können beispielsweise von 1 bis 15 Gew.- % eines Schlagzähmodifiers bezogen auf die Zusammensetzung der Einsatzstoffe in dem erfindungsgemäßen Verfahren eingesetzt werden. Vorteilhaft ist es ferner, dass in dem erfindungsgemäßen Verfahren zumindest ein Trennmittel eingesetzt wird. Dadurch kann die Handhabung der Polymerzusammensetzung bei Formgebungsverfahren verbessert werden. Vorzugsweise werden in dem erfindungsgemäßen Verfahren Trennmittel, ausgewählt aus
- Silikonen, beispielsweise in Form von Ölen, Ölemulsionen in Wasser, Fetten und Harzen,
- Wachsen, beispielsweise natürlichen und synthetischen Paraffinen mit und ohne funktionellen Gruppen,
- Metallseifen bzw. Metallsalzen von Fettsäuren, wie beispielsweise Calcium-, Blei-, Magnesium-, Aluminium- und/oder Zinkstearat,
- Fetten,
- Polymeren, beispielsweise Polyvinylalkohole, Polyestern und Polyolefinen,
- Phosphorsäuremonoester,
- Fluorkohlenwasserstoffen und/oder
- anorganische Trennmitteln, wie beispielsweise Graphit-, Talk- und Glimmerpuder, eingesetzt.

Als Trennmittel weist das mittels dem erfindungsgemäßen Verfahren hergestellte Prepolymer bevorzugt interne Trennmittelsysteme auf, die den Einsatzstoffen in dem erfindungsgemäßen Verfahren zugegeben werden und sich vor allem beim Formgebungsprozess entweder an der Oberfläche des Formteils anreichern oder eine schnellere Aushärtung der Oberfläche bewirken können, so dass es zwischen Formenwand und Formteil zu keinem Verbund kommen kann. Insbesondere werden in dem erfindungsgemäßen Verfahren Trennmittel der Fa. Acmos Chemie KG, die unter den Handelsnamen ACMOSAL^{®} 82-837, ACMOSAL^{®} 82-847, ACMOSAL^{®} 82-860, ACMOSAL^{®} 82-866, ACMOSAL^{®} 82-9018, ACMOSAL^{®} 82-853 vertrieben werden, eingesetzt. Das Trennmittel wird in dem erfindungsgemäßen Verfahren besonders bevorzugt in einer Menge von 0,1 bis 2 Gew.-%, ganz besonders bevorzugt von 0,2 bis 1,5 Gew.-% bezogen auf die Zusammensetzung der Einsatzstoffe eingesetzt.

Ferner können in dem Verfahren auch Netzmittel, vorzugsweise Tenside, bevorzugt ethoxylierte Fettalkohole oder Natriumlaurylsulfat, eingesetzt werden, bevorzugt in einer Menge von 0,1 bis 2 Gew.-% bezogen auf die Zusammensetzung der Einsatzstoffe.

Die intensive Durchmischung der Einsatzstoffe erfolgt in dem erfindungsgemäßen Verfahren in einem Extruder unter Wärmezufuhr. Intensive Durchmischung und kurzzeitige Reaktion bei Wärmezufuhr bedeutet, dass die Verweilzeit der Einsatzstoffe in dem Extruder üblicherweise 3 Sekunden bis 15 Minuten, bevorzugt 3 Sekunden bis 5 Minuten, besonders bevorzugt 5 bis 180 Sekunden und ganz besonders bevorzugt von 30 bis 90 Sekunden beträgt. Die Einsatzstoffe werden dabei kurzzeitig unter Wärmezufuhr intensiv gemischt und ggf. partiell zur Reaktion gebracht. Je nach Art der Einsatzstoffe und der Endprodukte können diese Werte für Verweilzeit und Temperatur variieren.

Da mittels des erfindungsgemäßen Verfahrens ein Prepolymer hergestellt werden soll, wird bei den gewählten Temperaturen, Verweilzeiten und Zuführung der Stoffströme vorzugsweise nur ein Umsatz von maximal 5 % bezogen auf das eingesetzte Oxazolin erzielt. In einer besonders bevorzugten Ausführungsform des erfindungsgemäßen Verfahrens erfolgt kein Umsatz.

Als Extruder sind Geräte wie Ein- oder Mehrschneckenextruder, insbesondere Zweischneckenextruder, Planetwalzenextruder oder Ringextruder für das erfindungsgemäße Verfahren besonders geeignet und werden bevorzugt verwendet. In einer besonderen Ausführungsform des erfindungsgemäßen Verfahrens können auch Mehrwellenextruder, wie beispielsweise Ringextruder, eingesetzt werden. Besonders bevorzugt sind Mehrschneckenextruder, insbesondere Zweischneckenextruder, und Mehrwellenextruder, insbesondere Ringextruder. Ganz besonders bevorzugt sind Zweischneckenextruder.

Die Zudosierung der Einsatzstoffe in den Extruder erfolgt vorzugsweise in getrennten Stoffströmen, um eine vorzeitige Aushärtung des Prepolymers zu vermeiden. Daher ist der Einsatz eines mehrgehäusigen Extruders bevorzugt. Unter einem mehrgehäusigen Extruder wird im Rahmen dieser Erfindung ein Extruder verstanden, dessen Zylindermantel der Schnecke(n) in verschiedene Zonen unterteilt ist, die wiederum separat beheizt oder gekühlt werden können. Ferner ist es möglich in diese verschiedenen Zonen, den sogenannten Gehäusen, Stoffströme separat voneinander zuzuführen. Auf diese Weise können die Stoffströme gezielt an verschiedenen Stellen des Extruders zugeführt werden, wobei die Zusammensetzung der einzelnen Stoffströme sich unterscheiden kann.

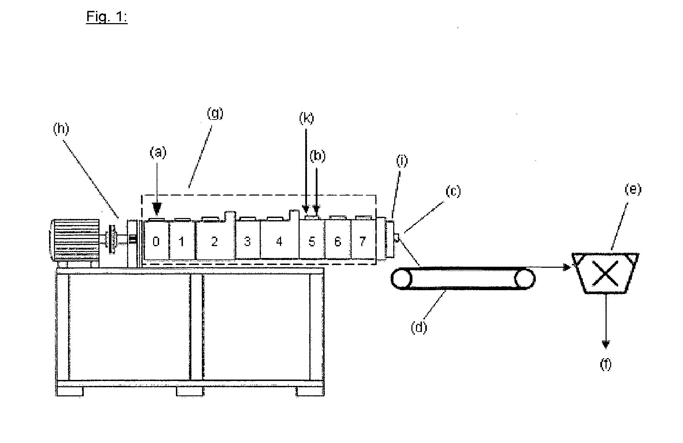

Die Figur 1 beschreibt schematisch einen beispielhaften Aufbau eines solchen mehrgehäusigen Extruders:
(a) Zudosierung des Stoffstrom A
(b) Zudosierung des Stoffstrom B
(c) Produktaustragsstelle (Messstelle für die Austrittstemperatur)
(d) Kühlband
(e) Zerkleinerer
(f) Granulat
(g) Zylindermantel unterteilt in acht verschiedene Zonen, den sogenannten Gehäusen
(h) Schneckenantrieb
(i) Kopf des Extruders (Messstelle für die Kopftemperatur)
(k) Zudosierung des Stoffstroms C

Vorzugsweise weisen die verschiedenen Gehäuse des Extruders in dem erfindungsgemäßen Verfahren unterschiedliche Temperaturen auf. Bevorzugt weist das Gehäuse bzw. die Gehäuse direkt neben dem Schneckenantrieb eine Temperatur unterhalb der Reaktionstemperatur (Temperaturzone TZ1), besonders bevorzugt von 30 bis 100°C, auf. Auch das Gehäuse bzw. die Gehäuse vor der Produktaustragsstelle weist eine Temperatur unterhalb der Reaktionstemperatur auf (Temperaturzone TZ3), besonders bevorzugt von 100 bis 160°C. Die mittig liegenden Gehäuse des Extruders weisen die gewünschte Reaktionstemperatur auf (Temperaturzone TZ2), die bei dem erfindungsgemäßen Verfahren von 160 bis 200°C, bevorzugt von 170 bis 190°C und besonders bevorzugt von 175 bis 185°C beträgt.

Im Rahmen dieser Erfindung ist der Begriff Reaktionstemperatur nicht gleichbedeutend mit einer Reaktion mit einem nennenswerten Umsatz, vielmehr wird in dem erfindungsgemäßen Verfahren ein maximaler Umsatz von 5 %, bevorzugt jedoch kein Umsatz angestrebt.

In dem erfindungsgemäßen Verfahren wird vorzugsweise das Phenolharz sowie die Oxazolin-Komponente in einem Stoffstrom A dem Extruder zugeführt, bevorzugt erfolgt die Zudosierung in ein Gehäuse des Extruders mit der Temperaturzone TZ1 und besonders bevorzugt erfolgt die Zudosierung in das erste Gehäuse direkt neben dem Schneckenantrieb.

Von großem Vorteil ist es die Epoxide als auch den Katalysator in einem separatem Stoffstrom B bzw. in einem Stoffstrom C dem Extruder zuführen, vorzugsweise erfolgt die Zuführung des Stoffstroms B und C in ein mittig liegendes Gehäuse der Temperaturzone TZ2 oder in ein Gehäuse vor der Produktaustragsstelle der Temperaturzone TZ3. Bevorzugt erfolgt dies in das Gehäuse der Temperaturzone TZ2, das der Produktaustragsstelle am nächsten liegt. Die beiden Stoffströme B und C werden besonders bevorzugt getrennt dem Extruder zugeführt, dies ist insbesondere von Vorteil, wenn der Katalysator als Lösung dem Extruder zugeführt wird.

In einer besonderen Ausführungsform des erfindungsgemäßen Verfahrens kann der Stoffstrom B, sofern der Katalysator als Feststoff und nicht als Lösung vorliegt, dem Stoffstrom A vor dem Extruder zugeführt werden, so dass die Stoffströme A und B gemeinsam dem Extruder zugeführt werden. Bevorzugt erfolgt die gemeinsame Zudosierung der beiden Stoffströme A und B in der Temperaturzone TZ1 und besonders bevorzugt erfolgt die gemeinsame Zudosierung in das erste Gehäuse direkt neben dem Schneckenantrieb.

Die möglichen Additive, wie beispielsweise Entschäumer, Entlüfter, Stabilistoren oder Antioxidantien werden vorzugsweise in dem Stoffstrom A dem Extruder zugeführt. Es ist jedoch auch möglich die Additive an einer anderen Einfüllvorrichtung separat der beiden Stoffströme A und B einem der Gehäuse des Extruders zuzuführen.

Die nachgeschaltene Abkühlung wird bevorzugt schnell durchgeführt und kann in dem Extruder integriert sein. Aber auch der Einsatz von Rohrbündeln, Rohrschlangen, Kühlwalzen, Luftförderern und Transportbändern aus Metall, die dem Extruder nachgeschalten sind, ist möglich.

Die Konfektionierung erfolgt je nach Viskosität des den Extruder verlassenden Prepolymers zunächst durch weitere Abkühlung mittels entsprechender vorgenannter Gerätschaften auf eine geeignete Temperatur. Dann erfolgt die Pastillierung oder aber eine Zerkleinerung in eine gewünschte Partikelgröße mittels Walzenbrecher, Stiftmühle, Hammermühle, Schuppwalzen oder Ähnlichem.

Das mittels dem erfindungsgemäßen Verfahren erhältliche Prepolymer zeichnet sich dadurch aus, dass dieses vorzugsweise in Ketonen, bevorzugt in 2-Butanon, klar löslich ist, sofern keine Feststoffe, wie beispielsweise gefällte Kieselsäuren als Additive im erfindungsgemäßen Verfahren eingesetzt worden sind. Ferner weist das erfindungsgemäße Prepolymer vorzugsweise einen Schmelzbereich von 60 bis 120°C, vorzugsweise von 77 bis 116°C auf. Diese Eigenschaften des erfindungsgemäßen Prepolymers unterscheiden es von denen des Standes der Technik, die in 2-Butanon nicht löslich sind. Ferner lässt sich ein Schmelzpunkt von den Produkten gemäß dem Stand der Technik nicht bestimmen, da sich diese in der Regel vorher zersetzen.

Die Eigenschaften des erfindungsgemäßen Prepolymers weisen auf eine deutlich geringere Vernetzung hin im Gegensatz zu Produkten gemäß Verfahren des Stands der Technik. Das erfindungsgemäße Prepolymer kann daher als Lösung, beispielsweise in einem Keton, wie 2-Butanon, auf einem Trägermaterial, wie beispielsweise Glas- oder Kohlenstofffaser, aufgebracht werden. Auch der Auftrag des Prepolymers mittels Pulvertechnologie ist möglich, da das erfindungsgemäße Prepolymer über einen Schmelzpunkt verfügt und somit ohne Zersetzung geschmolzen werden kann.

Ferner ist Gegenstand dieser Erfindung die Verwendung des erfindungsgemäßen Prepolymers zur Herstellung von Werkstoffen, insbesondere von Verbundwerkstoffen, besonders bevorzugt von Faserverbundwerkstoffen. Neben der Verwendung zur Herstellung von Verbundwerkstoffen kann das erfindungsgemäße Prepolymer auch zur Herstellung von Kunststoffen eingesetzt werden. Diese hergestellten Kunststoffe weisen vorzugsweise eine Glasübergangstemperatur T_{g} von 140 bis 200°C und bevorzugt von 175 bis 190 °C auf, bevorzugt sind diese Werkstoffe formaldehydfrei.

Je nach Art der Verwendung kann das erfindungsgemäße Prepolymer zunächst in handelsüblichem Lösemittel, insbesondere Ketone, bevorzugt in 2-Butanon gelöst werden.

In der erfindungsgemäßen Verwendung des oben beschriebenen Prepolymers können anorganische Verstärkungungsfasern, wie beispielsweise Glasfasern, organische Verstärkungsfasern, wie beispielsweise Aramidfasern oder Kohlenstofffasern, metallische Verstärkungsfasern oder Naturfasern eingesetzt werden. Die Verstärkungsfasern können hierbei in Form von Geweben, Gelegen, Multiaxialgelegen, Vliesen, Gestricke, Geflechte oder Matten eingesetzt werden.

Vorzugsweise wird das erfindungsgemäße Prepolymer zunächst in einem Keton, bevorzugt in 2-Butanon gelöst, anschließend werden Verstärkungsfasern, bevorzugt Glasfasern oder

Kohlenstofffasern, mit der Lösung des erfindungsgemäßen Prepolymers imprägniert und abschließend gehärtet.

Das oben beschriebene Prepolymer wird bei der erfindungsgemäßen Anwendung als Matrix eingesetzt. So kann dieses Prepolymer beispielsweise zur Herstellung von vorimprägnierten Halbzeugen, wie beispielsweise Sheet Molding Compound (SMC) oder Bulk Molding Compound (BMC), eingesetzt werden. Pre-Forming kann ebenfalls zur Herstellung des Halbzeugs in der erfindungsgemäßen Verwendung eingesetzt werden.

Die Verarbeitung dieses Prepolymers mit Verstärkungsmaterialen zu Verbundwerkstoffen kann durch eine Vielzahl von Verfahren / Technologien gemäß dem Stand der Technik erfolgen. Insbesondere erfolgt die Herstellung des Verbundwerkstoffes mittels einem der nachfolgend gelisteten Technologien:
- Laminieren bzw. auch Handlaminieren,
- Prepreg-Technologie,
- Spritzpressen (Resin Transfer Molding, RTM),
- Infusionsverfahren, wie beispielsweise dem Resin Infusion Molding (RIM) oder dem Seeman Composites Resin Infusion Process (SCRIMP),
- Wickelverfahren,
- Pultrusionsverfahren oder
- Faserlegeverfahren.

Die Härtung dieses Prepolymers kann in der erfindungsgemäßen Verwendung mittels Temperaturzuführung, beispielsweise in einem Ofen, in einem Autoklaven oder in einer Presse, oder auch mittels Mikrowelle erfolgen.

Die mittels der erfindungsgemäßen Verwendung hergestellten Verbundwerkstoffe können sich insbesondere im Bereich der Luftfahrtindustrie, des Transportwesens, wie beispielsweise Automobilindustrie, und der Elektroindustrie eingesetzt werden. Auch können diese Verbundwerkstoffe in Windkraftanlagen, Rohren oder Behältern in Form von Tanks oder Druckkesseln eingesetzt werden.

Das Prepolymer kann auch für die Herstellung von Leichtbaustrukturen eingesetzt werden, insbesondere in Kombination mit Mehrschichtaufbauten, wie beispielsweise Waben oder Schäumen auf der Basis von Phenolharz, Polyimid, Glas, Polyurethan, Polyamid oder Polyvinylchlorid.

Der Einsatz des Prepolymers in Werkstoffen führt insbesondere zu Bauteilen, mit einer hohen Wärmeformbeständigkeit, einer hohen Glasübergangstemperatur T_{g}. Vorteilhaft ist auch die hohe Zähelastizität dieses Prepolymers, die zu verbesserten Impacteigenschaften führt.

Weitere Anwendungsfelder für das Prepolymer bzw. den daraus resultierenden Werkstoffen sind beispielsweise Schleifmittel, feuerfeste Erzeugnisse, in der Gießereündustrie, für Batterieseparatoren, in Druck- und Spritzgusserzeugnissen , in Mineralwolle (u.a. aus Glas, Stein oder Basalt (formaldehydfrei)), für Papierimprägnierungen, in Laminaten basierend aus Glas oder Papier für Elektroisolationen, für die Herstellung von Schäumen, bei der Beschichtungen von Glas oder Metall, beispielsweise als Kabelschutz, in Gummimischungen als Ersatz für Novolak als separate Phase und als Co-Reaktant mit anderen Duromeren, wie beispielsweise Bismaleinimid.

Vorzugsweise kann das erfindungsgemäße Prepolymer zur Herstellung von Prepregs eingesetzt werden. Im Rahmen dieser Erfindung werden unter Prepregs (englische Kurzform für vorimprägnierter Fasern) ein Halbzeug bestehend aus Endlosfasern und einer ungehärteten Matrix bestehend aus dem erfindungsgemäßen Prepolymer verstanden. Als Endlosfasern können hierfür Glasfasern, Kohlenstofffasern oder Aramidfasern eingesetzt werden. Bevorzugt wird das erfindungsgemäße Prepolymer als Pulver zur Herstellung dieser Prepregs eingesetzt.

Die nachfolgenden Beispiele sollen das erfindungsgemäße Verfahren näher erläutern, ohne dass die Erfindung auf diese Ausführungsform beschränkt sein soll.

### Beispiele

### Vergleichsbeispiele 1 bis 3:

14,30 g 1,3-Phenylenbisoxazolin, 13,91 g Phenolharz (DUREZ^{®} 33100 der Fa. Sumitomo-Bakelite), 1,50 g Epoxide (ARALDITE^{®} 506 Epoxyresin der Fa. Aldrich) und 0,30 g des Katalysator werden bei 160°C bei 50 UpM in einer Knetkammer vom Typ Brabenderkneter W 30 gemischt. Um ein Herausdrücken des Produkts aus dem Gehäuse zu unterdrücken wird der Stempel des Kneters über einen Hebel mit einem 1 kg-Gewicht beschwert. Die Mischung ist bereits nach einigen Minuten nicht mehr knetbar, so dass der Mischvorgang abgebrochen wird. Die eingesetzten Katalysatoren und die Ergebnisse sind in der Tabelle 1 zusammengefasst.

**Tabelle 1:**

| **Beispiel** | **Katalyator** | **Knetdauer** | **Schmelzpunkt bzw. Zersetzungstemperatur** |
|---|---|---|---|
| 1 | Bortrifluorid-Ethylamin-Addukt | 10 Minuten | > 300 °C |
| 2 | Bortrifluorid-Methanol-Addukt | 4 Minuten | > 300 °C |
| 3 | Bortrifluorid-Phosphorsäure-Addukt | 7 Minuten | > 300 °C |

Ein herkömmliches Mischen der Komponenten in einer Knetkammer führt zu einem ausgehärteten Produkt, dessen Schmelzpunkt bzw. Zersetzungstemperatur bei über 300°C liegt und somit als Prepolymer nicht geeignet ist.

### Vergleichsbeispiele 4 bis 5:

14,30 g 1,3-Phenylenbisoxazolin und 13,90 g Phenolharz (DUREZ^{®} 33100 der Fa. Sumitomo-Bakelite) werden bei 160 °C Badtemperatur in einem Becherglas ca. 30 Minuten aufgeschmolzen; anschließend werden unter Rühren 1,50 g Epoxide (ARALDITE^{®} 506 Epoxyresin der Fa. Aldrich) und 0,30 g des Katalysators zugegeben, wenige Minuten nach der Zugabe des Katalysators ist die Mischung nicht mehr rührbar. Die eingesetzten Katalysatoren und die Ergebnisse sind in der Tabelle 2 zusammengefasst.

**Tabelle 2:**

| **Beispiel** | **Katalyator** | **Dauer des Rührens nach Katalysatorzugabe** | **Schmelzpunkt bzw. Zersetzungstemperatur** |
|---|---|---|---|
| 4 | Bortrifluorid-Ethylamin-Addukt | 1 Minute | > 300 °C |
| 5 | Bortrifluorid-Methanol-Addukt | 2 Minuten | > 300 °C |

Auch das verspätete Zugeben des Epoxids und des Katalysators zur Mischung führt zu einem ausgehärteten Produkt, dessen Schmelzpunkt bzw. Zersetzungstemperatur bei über 300°C liegt und somit als Prepolymer nicht geeignet ist.

### Vergleichsbeispiel 6:

14,30 g 1,3-Phenylenbisoxazolin und 13,90 g Phenolharz (DUREZ^{®} 33100 der Fa. Sumitomo-Bakelite) werden bei 160 °C Badtemperatur in einem Becherglas ca. 30 Minuten aufgeschmolzen; anschließend werden unter Rühren 1,50 g Epoxide (ARALDITE^{®} 506 Epoxyresin der Fa. Aldrich) und 0,30 g Triphenylphosphit als Katalysator zugesetzt. Die Einsatzstoffe werden weitere 5 Minuten gerührt und anschließend die Schmelze auf Raumtemperatur abgekühlt. Der Schmelzbereich des Prepolymers beträgt von 85,5 bis 101 °C und die Glasübergangstemperatur T_{g} beträgt 137 °C, wobei die Härtung für 6 Stunden bei einer Temperatur von 180°C durchgeführt wurde.

Die Verwendung des Triphenylphosphits als Katalysator führt zu einem Prepolymer, das zu einem Werkstoff mit einer Glasübergangstemperatur T_{g} von nur 137°C führt.

### Beispiele 7 bis 10:

Die Durchführung der Beispiele 7 bis 10 erfolgt in einem Doppelschneckenextruder vom Typ DSE 25 der Fa. Brabender bestehend aus acht Gehäusen, die separat beheizt und gekühlt werden (siehe Fig. 1).

Die Temperaturen der Gehäuse des Extruders werden wie folgt eingestellt:

| | |
|---|---|
| • Gehäuse 0: | 35 bis 45 °C |
| • Gehäuse 1: | 86 bis 100 °C |
| • Gehäuse 2 bis 5: | 180 °C |
| • Gehäuse 6: | 120 bis 160 °C |
| • Gehäuse 7: | 100 bis 110 °C |
| • Kopftemperatur: | 100 bis 160 °C |
| • Austrittstemperatur: | 148 bis 154 °C |

Alle Feststoffkomponenten (Phenolharz, Oxazolin, Stabilisator, Antioxidants, ggf. Flammschutzmittel) - mit Ausnahme des Epoxids und des Katalysators - werden mechanisch vorgemischt und über einen Dosiertrichter in das Gehäuse 0 des Extruders gefördert (siehe (a) in Fig. 1). Parallel erfolgt die Dosierung der Epoxids (Vorlagebehälter hat 100 °C Manteltemperatur, siehe (k) in Fig. 1) und der Katalysatorlösung aus zwei verschiedenen Vorratsbehältern in das Gehäuse 5 (siehe (b) in Fig. 1). Der Katalysator wird als 20 bis 44 Gew.-% ige Lösung in die Schmelze gefördert. Der Durchsatz des Extrudats liegt bei ca. 6 kg/h. Die Schmelze wird über ein wassergekühltes Band (siehe (d) in Fig. 1) abgefahren, zerkleinert und gemahlen (siehe (e) in Fig. 1).

Die Einsatzstoffe und deren Mengen sind in der Tabelle 3 dargestellt.

**Tabelle 3:**

| **Beispiel** | **7** | **8** | **9** | **10** |
|---|---|---|---|---|
| **Komponente** | **Gehalt in der Zusammensetzung der Einsatzstoffe** (in Gew.-%) | | | |
| Phenolharz ¹ | 46,02 | 45,53 | 45,10 | 43,72 |
| Oxazolin ² | 47,33 | 46,83 | 46,38 | 44,96 |
| Epoxid ³ | 5,00 | 4,95 | 4,90 | 4,75 |
| Katalysator ⁴ | 0,95 | 2,00 | 0,93 | 0,90 |
| Stabilisator ⁵ | 0,47 | 0,46 | 0,46 | 0,45 |
| Antioxidants ⁶ | 0,23 | 0,23 | 0,23 | 0,22 |
| Flammschutzmittel ⁷ | 0,00 | 0,00 | 2,00 | 5,00 |

| | | | | |
|---|---|---|---|---|
| ¹ DUREZ^{®} 33100 der Fa. Sumitomo-Bakelite ² 1,3-Phenylenbisoxazolin ³ EPILOX^{®} 18-00 der Fa. LEUNA-Harze GmbH ⁴ Bortrifluorid-Ethylamin-Addukt als 44 Gew.-% ige Lösung in Ethanol ⁵ CYASORB^{®} 3346 der Fa. Cytec ⁶ RALOX^{®} LC der Fa. Raschig. ⁷ CLOISITE^{®} 30B der Fa. Southern Clay Products, Inc. | | | | |

Die Extruderausträge werden in zeitlich regelmäßigen Abständen untersucht:
- Der Schmelzpunkt der erhaltenen Extruderausträge wird mittels des Verfahrens gemäß Tottoli (CH 320388) ermittelt.
- Ferner wird eine 50 Gew.-%ige Lösung des Extruderausträge in 2-Butanon hergestellt und der Gewichtsanteil der unlöslichen Bestandteile ermittelt.
- Die Ermittlung der Glasübergangstemperatur T_{g} erfolgt mittels der dynamischen Differenzkalorimetrie (Differential Scanning Calorimetry - DSC). Der Extruderaustrag wird von 25 °C auf 180 °C mit einer Aufheizrate von 10 K/min aufgeheizt, in einem Alupfännchen 6 Stunden bei 180 °C getempert bzw. gehärtet, auf 25 °C mit einer Abkühlrate von 10 K/min abgekühlt und anschließend die Glasübergangstemperatur T_{g} mit einer Aufheizrate von 10 K/min auf 300 °C gemäß DIN 73765 ermittelt.

Die Eigenschaften der Produkte aus den Vergleichsbeispielen wurden ebenfalls mit diesen Analytikverfahren ermittelt.

Die Ergebnisse der Untersuchungen der Extruderausträge aus den Beispielen 7 bis 10 sind in der Tabelle 4 dargestellt:

**Tabelle 4:**

| **Beispiel** | **Schmelzpunkt** (in °C) | **Lösungsverhalten** | **Glasübergangstemperatur** (in °C) |
|---|---|---|---|
| 7 | 77-96 | klare Lösung | 187 |
| 8 | 78-92 | Klare Lösung | 181 |
| 9 | 84 - 116 | bräunliche Lösung mit Feststoffanteil | nicht bestimmt |
| 10 | 79-94 | nicht bestimmt | nicht bestimmt |

Bei dem beobachteten Feststoffanteil in Beispiel 9 handelt es sich um das Flammschutzmittel, das als Feststoff vorliegt und somit nicht in 2-Butanon löslich ist, analog verhält es sich mit dem Beispiel 10.

Die erfindungsgemäßen Beispiele zeigen, dass aufgrund des erfindungsgemäßen Verfahrens ein Prepolymer mittels eines Lewis-Addukts des Bortrifluorids hergestellt werden kann, das die Anforderung der Löslichkeit in einem Keton erfüllt. Insbesondere zeigen diese Beispiele, dass dieses Prepolymer einen Schmelzpunkt von kleiner 120°C aufweist. Die daraus herstellbaren Werkstoffe weisen ein Glasübergangstemperatur T_{g} von 181 bis 187 °C auf.

### Beispiel 11:

Sämtliche Feststoffe (Phenolharz, Oxazolin, Stabilisator, Antioxidants) werden mechanisch gemischt und über einen Dosiertrichter (siehe (a) in Fig. 1) unter paralleler Dosierung von Katalysator (siehe (b) in Fig. 1) und einer Mischung bestehend aus Epoxid und Schlagzähmodifier (Vorlagebehälter hat 50 °C Manteltemperatur, siehe (k) in Fig. 1) in den Extruder gefördert. Die Mischung wird erzeugt, indem der Schlagzähmodifier in einem Trockenschrank auf 60 °C erwärmt und mit dem Epoxid mit Hilfe eines Propellerrührers homogenisiert wird. Der Katalysator wird als 40 Gew.-% ige Lösung in die Schmelze gefördert. Der Durchsatz des Extrudats liegt bei ca. 6 kg/h. Die Schmelze wird über ein wassergekühltes Band abgefahren, zerkleinert und gemahlen.

**Tabelle 5: Zusammensetzung der Polymerschmelze**

| **Komponente** | **Gehalt** (in Gew.-%) |
|---|---|
| Phenolharz ¹ | 41,41 |
| Oxazolin ² | 42,60 |
| Antioxidants ⁶ | 0,21 |
| Stabilisator ⁵ | 0,42 |
| Katalysator ^{4a} | 0,86 |
| Epoxid ³ | 4,50 |
| Schlagzähmodifier ⁸ | 10,00 |

| | |
|---|---|
| ^{4a} Bortrifluorid-Ethylamin-Addukt als 40 % Lösung in Ethanol ⁸ HYPRO CTBN 1300 x13 | |

Der Schmelzbereich des Prepolymers liegt bei 68 bis 86 °C.

### Beispiel 12:

25,39 g 1,3-Phenylenbisoxazolin, 20,76g Phenolharz (Durez® 32311 der Fa. Sumitomo-Bakelite), 0,11g Antioxidant (IONOL LC® der Fa. Raschig) und 0,23g Stabilisator (Cyasorb® 3346 der Fa. Cytec) werden in einem Becherglas bei 140°C in ca. 30 Minuten aufgeschmolzen und ca. 5 Minuten gerührt. Nach Abkühlen der Schmelze auf Raumtemperatur wird diese durch Mörsern homogenisiert, im Becherglas bei 100 °C in ca. 30 Minuten aufgeschmolzen und unter Rühren mit 2,50g Epoxid (Epilox® P13-20 der Fa. Leuna Harze) und 1.0g latentem Katalysator (aus äquimolaren Mengen an p-Toluolsulfonsäure - Monohydrat (Fa. Merck) und Diethanolamin (Fa. Merck) hergestellt, entspricht 0,64g = 1,28% p-Toluolsulfonsäure- Monohydrat) versetzt. Die Einsatzstoffe werden weitere 5 Minuten gerührt und anschließend läßt man die Schmelze auf Raumtemperatur abkühlen. Die Glasübergangstemperatur T_{g} nach Härtung beträgt 121 °C, wobei die Härtung für 6 Stunden bei einer Temperatur von 180 °C durchgeführt wurde.
Die Bestimmung der Glasübergangstemperaturen T_{g} erfolgt mittels der dynamischen Differenzkalorimetrie (Differential Scanning Calorimetry - DSC) mit einer Aufheizrate von 10 K/min auf 300 °C gemäß DIN 73765.

Die Verwendung von latenter p-Toluolsulfonsäure-Monohydrat / Diethanolamin (1,28% p-Toluolsulfonsäure - Monohydrat) führt zu einem Prepolymer, das zu einem Werkstoff mit einer Glasübergangstemperatur T_{g} von 121 °C führt.

### Beispiel 13:

25,68 g 1,3-Phenylenbisoxazolin , 21,00g Phenolharz (Durez® 32311 der Fa. Sumitomo-Bakelite), 0,11g Antioxidant (IONOL LC® der Fa. Raschig) und 0,23g Stabilisator (Cyasorb® 3346 der Fa. Cytec) werden in einem Becherglas bei 140°C in ca. 30 Minuten aufgeschmolzen und ca. 5 Minuten gerührt. Nach Abkühlen der Schmelze auf Raumtemperatur wird diese durch Mörsern homogenisiert, im Becherglas bei 100 °C in ca. 30 Minuten aufgeschmolzen und unter Rühren mit 2,50g Epoxid (Epilox® P13-20 der Fa. Leuna Harze) und 0,48g latentem Katalysator (aus äquimolaren Mengen an p-Toluolsulfonsäure - Monohydrat (Fa. Merck) und Diethanolamin (Fa. Merck) hergestellt, entspricht 0,31 g = 0,61 % p-Toluolsulfonsäure- Monohydrat) versetzt. Die Einsatzstoffe werden weitere 5 Minuten gerührt und anschließend läßt man die Schmelze auf Raumtemperatur abkühlen. Die Glasübergangstemperatur T_{g} nach Härtung beträgt 93,6 °C, wobei die Härtung für 6 Stunden bei einer Temperatur von 180 °C durchgeführt wurde.
Die Bestimmung der Glasübergangstemperaturen T_{g} erfolgt mittels der dynamischen Differenzkalorimetrie (Differential Scanning Calorimetry - DSC) mit einer Aufheizrate von 10 K/min auf 300 °C gemäß DIN 73765.

Die Verwendung von latenter p-Toluolsulfonsäure-Monohydrat / Diethanolamin (0,61 % p-Toluolsulfonsäure - Monohydrat) führt zu einem Prepolymer, das zu einem Werkstoff mit einer Glasübergangstemperatur T_{g} von 93,6 °C führt.

### Beispiel 14:

25,39 g 1,3-Phenylenbisoxazolin, 20,76g Phenolharz (Durez® 32311 der Fa. Sumitomo-Bakelite), 0,11g Antioxidant (IONOL LC® der Fa. Raschig ) und 0,23g Stabilisator (Cyasorb® 3346 der Fa. Cytec) werden in einem Becherglas bei 140°C in ca. 30 Minuten aufgeschmolzen und ca. 5 Minuten gerührt. Nach Abkühlen der Schmelze auf Raumtemperatur wird diese durch Mörsern homogenisiert, im Becherglas bei 100 °C in ca. 30 Minuten aufgeschmolzen und unter Rühren mit 2,50g Epoxid (Epilox® P13-20 der Fa. Leuna Harze) und 1.4 g latentem Katalysator (aus äquimolaren Mengen an p-Toluolsulfonsäure - Monohydrat (Fa. Merck) und 1-Amino-2-propanol (Fa. Merck) hergestellt, entspricht 1,0 g = 2 % p-Toluolsulfonsäure- Monohydrat) versetzt.
Die Einsatzstoffe werden weitere 2 Minuten gerührt, 5,55g Exolit AP 422 (Flammschutzmittel) zugesetzt und anschließend läßt man die Schmelze auf Raumtemperatur abkühlen. Die Glasübergangstemperatur T_{g} nach Härtung beträgt 113 °C, wobei die Härtung für 3 Stunden bei einer Temperatur von 140 °C durchgeführt wurde. Anschließend erfolgte eine Nachhärtung bei 180 °C von zwei Stunden, die zu einer Glasübergangstemperatur von 144 °C führt.
Die Bestimmung der Glasübergangstemperaturen T_{g} erfolgt mittels der dynamischen Differenzkalorimetrie (Differential Scanning Calorimetry - DSC) mit einer Aufheizrate von 10 K/min auf 300 °C gemäß DIN 73765.

## Patentansprüche

1. Verfahren zur kontinuierlichen Herstellung von Prepolymeren basierend auf Phenolharz, einer Oxazolin-Komponente und einem Epoxids in Gegenwart eines Katalysators unter Verwendung eines Extruders,
**dadurch gekennzeichnet,**
**dass** das Phenolharz und die Oxazolin-Komponente in einem Stoffstrom A und ein Lewis-Addukt des Bortrifluorids oder des Aluminiumtrichlorids oder Arylsulfonsäuren oder Alkylsulfonsäuren oder latente Arylsulfonsäuren oder latente Alkylsulfonsäuren als Katalysator als Stoffstrom B und das Epoxid in einem Stoffstrom C dem Extruder zugeführt werden, wobei der Zulauf des Stoffstroms A in Extrusionsrichtung gesehen vor dem Zulauf des Stoffstroms C liegt, bei einer Reaktionstemperatur von 120 bis 200 °C und einer Verweilzeit dieser Edukte im Extruder von 3 Sekunden bis 15 Minuten durchmischt werden und anschließend der Produktaustrag des Extruders auf eine Temperatur von kleiner 45 °C innerhalb von 30 bis 60 Sekunden abgekühlt wird.

2. Verfahren gemäß Anspruch 1,
**dadurch gekennzeichnet,**
**dass** als Extruder ein mehrgehäusiger Extruder eingesetzt wird.

3. Verfahren gemäß Anspruch 2,
**dadurch gekennzeichnet,**
**dass** die verschiedenen Gehäuse des Extruders unterschiedliche Temperaturen aufweisen.

4. Verfahren gemäß Anspruch 3,
**dadurch gekennzeichnet,**
**dass** das Gehäuse in welchem der Stoffstrom A zugegeben wird, das in Extrusionsrichtung daran anschließende Gehäuse und die Gehäuse vor der Produktaustragsstelle eine Temperatur unterhalb der Reaktionstemperatur aufweisen, wobei die dazwischen liegenden Gehäuse die Reaktionstemperatur aufweisen.

5. Verfahren gemäß Anspruch 4 ,
**dadurch gekennzeichnet,**
**dass** der Stoffstrom B und C in einem Gehäuse zugeführt wird, das in Extrusionsrichtung gesehen zwischen dem Gehäuse in welches der Stoffstrom A eingetragen wird und der Produktaustragsstelle liegt.

6. Verfahren gemäß Anspruch 4 oder 5,
**dadurch gekennzeichnet,**
**dass** die Stoffströme A und B gemeinsam in den Extruder zugeführt werden.

7. Verfahren gemäß zumindest einem der Ansprüche 1 bis 6,
**dadurch gekennzeichnet,**
**dass** als Epoxide Monoepoxide gemäß der Struktur 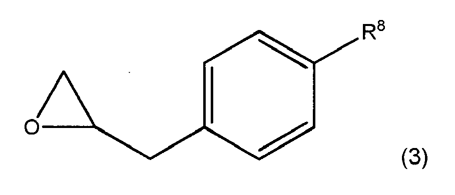 mit R⁸ = Wasserstoff, C₁₋₃-Alkylgruppe,
Diepoxide gemäß der Struktur (4) 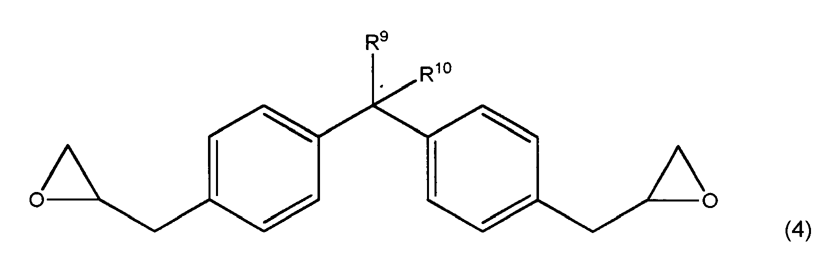 mit R⁹ und R¹⁰ = Wasserstoff und C₁₋₃-Alkylgruppe, wobei R⁹ und R¹⁰ gleich oder verschieden sein können
oder mehrfunktionelle Epoxide gemäß der Struktur (5) und/oder der Struktur (6) 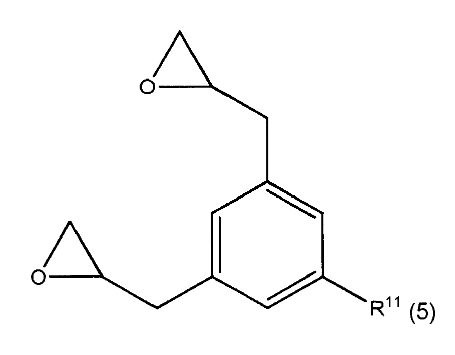 mit R¹¹ = Wasserstoff, C₁₋₃-Alkylgruppe oder 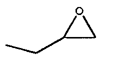 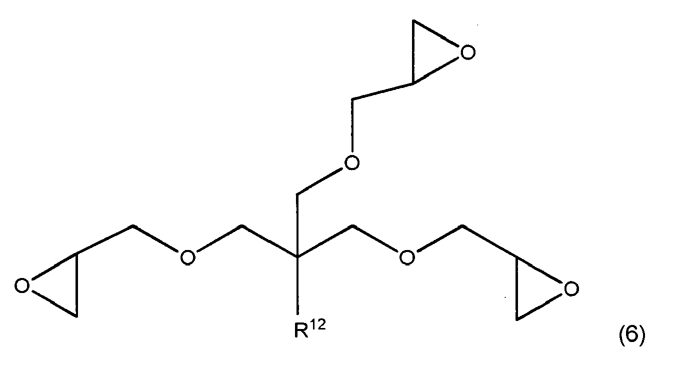 mit R¹² = Wasserstoff oder C₁₋₃-Alkylgruppe
eingesetzt werden.

8. Verfahren gemäß zumindest einem der Ansprüche 1 bis 7,
**dadurch gekennzeichnet,**
**dass** von 1 bis 10 Gew.-% an Epoxiden bezogen auf die Zusammensetzung der Einsatzstoffe eingesetzt wird.

9. Verfahren gemäß zumindest einem der Ansprüche 1 bis 8,
**dadurch gekennzeichnet,**
**dass** als Stabilisatoren HALS-Verbindungen (Hindered Amine Light Stabilizers) eingesetzt werden.

10. Verfahren gemäß zumindest einem der Ansprüche 1 bis 9,
**dadurch gekennzeichnet,**
**dass** als Antioxidantien sterisch gehinderte Phenole eingesetzt werden.

11. Verfahren gemäß zumindest einem der Ansprüche 1 bis 10,
**dadurch gekennzeichnet,**
**dass** 1 bis 15 Gew.- % eines Schlagzähmodifiers bezogen auf die Zusammensetzung der Einsatzstoffe eingesetzt wird.

12. Verfahren gemäß zumindest einem der Ansprüche 1 bis 11,
**dadurch gekennzeichnet,**
**dass** von 1 bis 10 Gew.-% eines halogenierten oder nicht-halogenierten Flammschutzmittels bezogen auf die Zusammensetzung der Einsatzstoffe eingesetzt wird.

13. Prepolymer erhältlich durch ein Verfahren gemäß zumindest einem der Ansprüche 1 bis 12.

14. Verwendung eines Prepolymers gemäß Anspruch 13 zur Herstellung von Werkstoffen.

15. Verwendung gemäß Anspruch 14,
**dadurch gekennzeichnet,**
**dass** das Prepolymer zunächst in 2-Butanon gelöst wird, anschließend die Verstärkungsfasern, ausgewählt aus Glasfasern oder Kohlenstofffasern, mit der Lösung des Prepolymers imprägniert werden und abschließend gehärtet wird.

16. Verwendung gemäß Anspruch 14,
**dadurch gekennzeichnet,**
**dass** das Prepolymer als Pulver zur Herstellung von Prepregs eingesetzt wird.

## Claims

1. Process for the continuous preparation of prepolymers based on phenolic resin, an oxazoline component and an epoxide in the presence of a catalyst, using an extruder,
**characterized**
**in that** the phenolic resin and the oxazoline component are supplied to the extruder in a stream A, and a Lewis adduct of boron trifluoride or of aluminium trichloride, or arylsulphonic acids or alkylsulphonic acids, or latent arylsulphonic acids or latent alkylsulphonic acids, as catalyst, are supplied to the extruder as stream B, and the epoxide is supplied to the extruder in a stream C, the infeed of stream A being situated, as seen in extrusion direction, before the infeed of stream C, these reactants are mixed at a reaction temperature of 120 to 200°C with a residence time in the extruder of 3 seconds to 15 minutes, and then the product discharge of the extruder is cooled to a temperature of less than 45°C within from 30 to 60 seconds.

2. Process according to Claim 1,
**characterized**
**in that** a multi-barrel extruder is used as extruder.

3. Process according to Claim 2,
**characterized**
**in that** the different barrels of the extruder have different temperatures.

4. Process according to Claim 3,
**characterized**
**in that** the barrel in which stream A is added, the subsequent barrel in extrusion direction, and the barrel before the product discharge location have a temperature below the reaction temperature, with the barrels in between having the reaction temperature.

5. Process according to Claim 4,
**characterized**
**in that** streams B and C are supplied in a barrel which, seen in extrusion direction, is located between the barrel in which stream A is introduced, and the product discharge location.

6. Process according to Claim 4 or 5,
**characterized**
**in that** streams A and B are supplied jointly into the extruder.

7. Process according to at least one of Claims 1 to 6,
**characterized**
**in that** epoxides used are monoepoxides of the structure 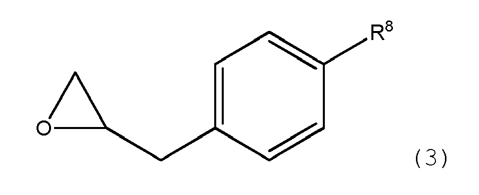 where R⁸ = hydrogen, C₁₋₃ alkyl group, diepoxides of the structure (4) 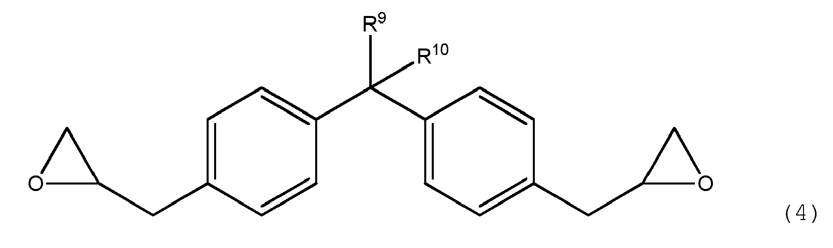 where R⁹ and R¹⁰ = hydrogen and C₁₋₃ alkyl group, it being possible for R⁹ and R¹⁰ to be identical or different,
or polyfunctional epoxides of the structure (5) and/or of the structure (6) 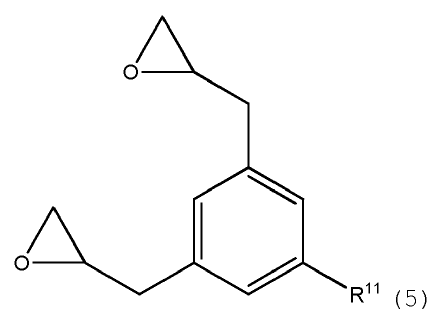 where R¹¹ = hydrogen, C₁₋₃ alkyl group or 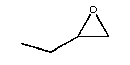 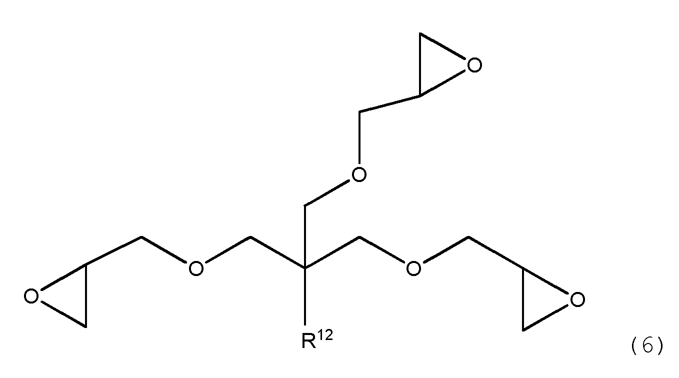 where R¹² = hydrogen or C₁₋₃ alkyl group.

8. Process according to at least one of Claims 1 to 7,
**characterized**
**in that** from 1% to 10% by weight of epoxides is used, based on the composition of the starting materials.

9. Process according to at least one of Claims 1 to 8,
**characterized**
**in that** stabilizers used are HALS compounds (Hindered Amine Light Stabilizers).

10. Process according to at least one of Claims 1 to 9,
**characterized**
**in that** antioxidants used are sterically hindered phenols.

11. Process according to at least one of Claims 1 to 10,
**characterized**
**in that** 1% to 15% by weight of an impact modifier is used, based on the composition of the starting materials.

12. Process according to at least one of Claims 1 to 11,
**characterized**
**in that** from 1% to 10% by weight of a halogenated or unhalogenated flame retardant is used, based on the composition of the starting materials.

13. Prepolymer obtainable by a process according to at least one of Claims 1 to 12.

14. Use of a prepolymer according to Claim 13 for producing materials.

15. Use according to Claim 14,
**characterized**
**in that** the prepolymer is first dissolved in 2-butanone, subsequently the reinforcing fibres, selected from glass fibres or carbon fibres, are impregnated with the solution of the prepolymer, and, lastly, curing is carried out.

16. Use according to Claim 14,
**characterized**
**in that** the prepolymer is used as powder for producing prepregs.

## Revendications

1. Procédé pour la préparation continue de prépolymères à base de résine phénolique, d'un composant oxazoline et d'un époxyde en présence d'un catalyseur en utilisant une extrudeuse, **caractérisé en ce que** la résine phénolique et le composant oxazoline sont alimentés dans un flux de substances A et un produit d'addition de Lewis du trifluorure de bore ou du trichlorure d'aluminium ou d'acides arylsulfoniques ou d'acides alkylsulfoniques ou d'acides arylsulfoniques latents ou d'acides alkylsulfoniques latents comme catalyseur est alimenté en tant que flux de substances B et l'époxyde est alimenté dans un flux de substances C dans l'extrudeuse, l'alimentation du flux de substances A, vu dans le sens de l'extrusion, se trouvant en amont de l'alimentation du flux de substances C, les flux sont mélangés à une température de réaction de 120 à 200°C et pendant une durée de séjour de ces produits de départ dans l'extrudeuse de 3 secondes à 15 minutes, puis le produit évacué de l'extrudeuse est refroidi à une température inférieure à 45°C en 30 à 60 secondes.

2. Procédé selon la revendication 1, **caractérisé en ce qu'**on utilise, comme extrudeuse, une extrudeuse à plusieurs chambres.

3. Procédé selon la revendication 2, **caractérisé en ce que** les différentes chambres de l'extrudeuse présentent des températures différentes.

4. Procédé selon la revendication 3, **caractérisé en ce que** la chambre dans laquelle le flux de substances A est ajouté, la chambre consécutive à celle-ci dans le sens de l'extrusion et la chambre en amont du site d'évacuation du produit présentent une température inférieure à la température de réaction, les chambres situées entre celles-ci présentant la température de réaction.

5. Procédé selon la revendication 4, **caractérisé en ce que** le flux de substances B et le flux de substances C sont alimentés dans une chambre, qui se trouve, vu dans le sens de l'extrusion, entre la chambre dans laquelle le flux de substances A est introduit et le site d'évacuation du produit.

6. Procédé selon la revendication 4 ou 5, **caractérisé en ce que** les flux de substances A et B sont alimentés ensemble dans l'extrudeuse.

7. Procédé selon au moins l'une quelconque des revendications 1 à 6, **caractérisé en ce qu'**on utilise, comme époxydes, des monoépoxydes selon la structure 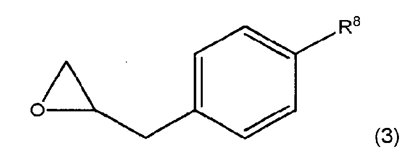 avec R⁸ = hydrogène, un groupe C₁-C₃-alkyle, des diépoxydes selon la structure (4) 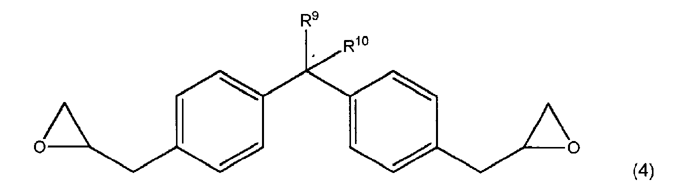 avec R⁹ et R¹⁰ = hydrogène et un groupe C₁₋₃-alkyle, R⁹ et R¹⁰ pouvant être identiques ou différents ou des époxydes polyfonctionnels selon la structure (5) et/ou la structure (6) 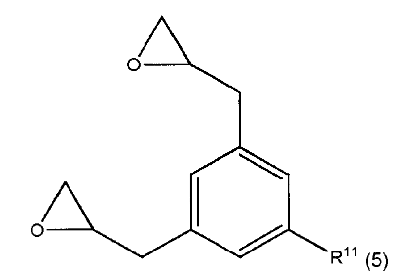 avec R¹¹ = hydrogène, un groupe C₁₋₃-alkyle ou 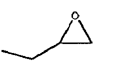 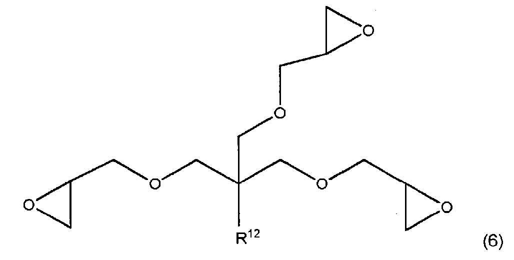 avec R¹² = hydrogène ou un groupe C₁₋₃-alkyle.

8. Procédé selon au moins l'une quelconque des revendications 1 à 7, **caractérisé en ce qu'**on utilise 1 à 10% en poids d'époxydes par rapport à la composition des substances de départ.

9. Procédé selon au moins l'une quelconque des revendications 1 à 8, **caractérisé en ce qu'**on utilise, comme stabilisants, des composés de type HALS (Hindered Amine Light Stabilizers - stabilisants à la lumière de type amine encombrée).

10. Procédé selon au moins l'une quelconque des revendications 1 à 9, **caractérisé en ce qu'**on utilise, comme antioxydants, des phénols stériquement encombrés.

11. Procédé selon au moins l'une quelconque des revendications 1 à 10, **caractérisé en ce qu'**on utilise 1 à 15% en poids d'un agent de modification de la résilience par rapport à la composition des substances de départ.

12. Procédé selon au moins l'une quelconque des revendications 1 à 11, **caractérisé en ce qu'**on utilise 1 à 10% en poids d'un agent ignifuge halogéné ou non halogéné par rapport à la composition des substances de départ.

13. Prépolymère pouvant être obtenu par un procédé selon au moins l'une quelconque des revendications 1 à 12.

14. Utilisation d'un prépolymère selon la revendication 13 pour la fabrication de matériaux.

15. Utilisation selon la revendication 14, **caractérisée en ce que** le prépolymère est d'abord dissous dans de la 2-butanone, puis les fibres de renforcement, choisies parmi les fibres de verre ou les fibres de carbone, sont imprégnées avec la solution du prépolymère puis on durcit.

16. Utilisation selon la revendication 14, **caractérisée en ce que** le prépolymère est utilisé sous forme de poudre pour la préparation de préimprégnés.
